## Europäisches Patentamt

## European Patent Office

## Office européen des brevets

(11) Veröffentlichungsnummer : **0 016 027**
**B1**

(12) **EUROPÄISCHE PATENTSCHRIFT**

(45) Veröffentlichungstag der Patentschrift :
22.09.82

(21) Anmeldenummer : 79900625.9

(22) Anmeldetag : 15.06.79

(86) Internationale Anmeldenummer :
PCT/CH 79/00089

(87) Internationale Veröffentlichungsnummer :
WO WO/80000 (24.01.80 Gazettee 80/02)

(51) Int. Cl.³ : **B 66 C   1/36**, F 16 B 45/02

(54) **LASTHAKEN.**

(30) Priorität : 16.06.78 DE 2826541

(43) Veröffentlichungstag der Anmeldung :
01.10.80 (Patentblatt 80/20)

(45) Bekanntmachung des Hinweises auf die Patenterteilung : 22.09.82 Patentblatt 82/38

(84) Benannte Vertragsstaaten :
FR

(56) Entgegenhaltungen :
FR A 957 974
FR A 2 228 903
NL B 11 843
US A 1 616 350
US A 2 503 522
US A 3 159 891
US A 3 587 887
US A 3 814 269

(73) Patentinhaber : ZEPF, Hans-Rudolf
Hirsackerstrasse 30
CH-8810 Horgen (CH)

(72) Erfinder : ZEPF, Hans-Rudolf
Hirsackerstrasse 30
CH-8810 Horgen (CH)

(74) Vertreter : Meyer, Reinhard, Dipl.-Ing.
c/o Dr. A. R. EGLI & CO Patentanwälte Postfach 473
CH-8034 Zürich (CH)

Imprimerie Jouve, 18, rue St-Denis, 75001 Paris, France

## Lasthaken

Die Erfindung betrifft einen Lasthaken für den Lastangriff in zwei annähernd entgegengesetzten Richtungen, der mit einer Sicherungsklinke und mit einem Fussteil zum Befestigen an einer Hebevorrichtung, insbesondere an einer Schaufel oder einem Löffel eines Baggers bzw. eines Trax, versehen ist, wobei die Sicherungsklinke und das von der Sicherungsklinke abgedeckte Hakenmaul zum Einführen eines Kettengliedes oder Seilflansches auf der Seite und in der Nähe des Fussteiles angeordnet ist.

Lasthaken sind in verschiedenen Ausführungsformen bekannt und kennzeichnen sich dadurch, dass das Hakenmaul durch eine Sicherungsklinke gesperrt ist, welche zum Einführen eines Kettengliedes oder eines Seilflansches gegen die Kraft einer Feder aufgedrück werden muss (NL-B-11843). Bei Baggern ist es bekannt, an der Schaufel bzw. am Löffel einen Lasthaken zu befestigen, damit der Bagger auch als Hebezeug Verwendung finden kann (US-A-38 14 269). Es werden hierbei Lasten aller Art. z.B. Röhren, Baustellenwerkzeuge, Werkzeugkisten u. dgl., angehoben und transportiert. Da die Schaufel bzw. der Löffel in verschiedene Lagen gebracht werden kann, muss der Lasthaken in der Lage sein, Kräfte in zwei annähernd entgegengesetzten Richtungen aufzunehmen und an der Befestigungsstelle an die Schaufel oder den Löffel zu leiten. Da aber der Löffel in erster Linie zum Baggern verwendet wird, muss der Lasthaken so ausgebildet sein, dass er auch bei mehrmaligem Eintritt in das Erdreich funktionstüchtig bleibt. Aus diesem Grunde wird bei einem bekannten Lasthaken dieser Art vorgesehen, das Hakenmaul auf der Seite der Befestigungsstelle anzuordnen. Nachteilig bei diesem Lasthaken ist die nierenförmige Ausbildung des vom Hakenkörper umgebenen Hakenraums. Bei Lastangriff an den beiden Enden dieses Hakenraums treten zusätzliche Biegekräfte aus, die den nierenförmigen Hakenraum zu strecken suchen. Ein weiterer Nachteil besteht darin, dass der nierenförmige Hakenraum die Einführweite zum Hakenmaul begrenzt, so dass der Fussteil, mit Hilfe dessen der Lasthaken an der Hebevorrichtung befestigt wird, derart mit dem Hakenkörper verbunden wird, dass der Hakenkörper von der Auflagefläche des Fussteiles distanziert ist. In der Praxis erfolgt dies durch Anschweissen der Fussteiles am eigentlichen Hakenkörper. Damit wird aber eine Schwachstelle innerhalb des Hakenkörpers geschaffen, der gemäss mehrerer nationaler Sicherheitsvorschriften nicht zulässig ist. Die nierenförmige Ausbildung des Hakenraums ist damit die Ursache, dass die zulässige Last entsprechend tiefer angesetzt werden muss.

Hier setzt nun die Erfindung ein, deren Aufgabe es ist, einen Lasthaken der eingangs beschriebenen Art so weiter auszubilden, dass die erwähnten Nachteile nicht auftreten und der Lasthaken bei vergleichbaren Grössenverhältnissen für eine wesentlich grösser zulässige Last ausgelegt werden kann, und zudem die Seitenstabilität, d.h. die Eignung beim Auftreten von Seitenkräften, verbessert wird. Weiter wird eine Materialersparnis erreicht, ohne dass dadurch der Zugang zum Hakenmaul verschlechtert würde.

Diese Aufgabe wird gemäss der Erfindung dadurch gelöst, dass der Fussteil durch einen Teil des Hakenkörpers selbst gebildet ist, welcher einen freien Hakenraum von länglicher Form umgibt, dessen Längsachse zur Auflagefläche des Fussteils und von dieser weg geneigt ist.

Die Erfindung ist in der Zeichnung in einem Ausführungsbeispiel dargestellt und nachfolgend beschrieben. Es zeigen :

Figur 1 eine Seitenansicht eines erfindungsgemässen Lasthakens,

Figur 2 einen Schnitt durch den Lasthaken nach Fig. 1 längs der Linie II-II,

Figur 3 einen Schnitt durch den Lasthaken nach Fig. 1 längs der Linie III-III,

Figur 4 eine Draufsicht einer Sicherungsklinke zum Sperren des Hakenmauls und

Figur 5 einen Schnitt ähnlich demjenigen nach Fig. 2 für einen Lasthaken zum Anschrauben an seiner Befestigungsstelle.

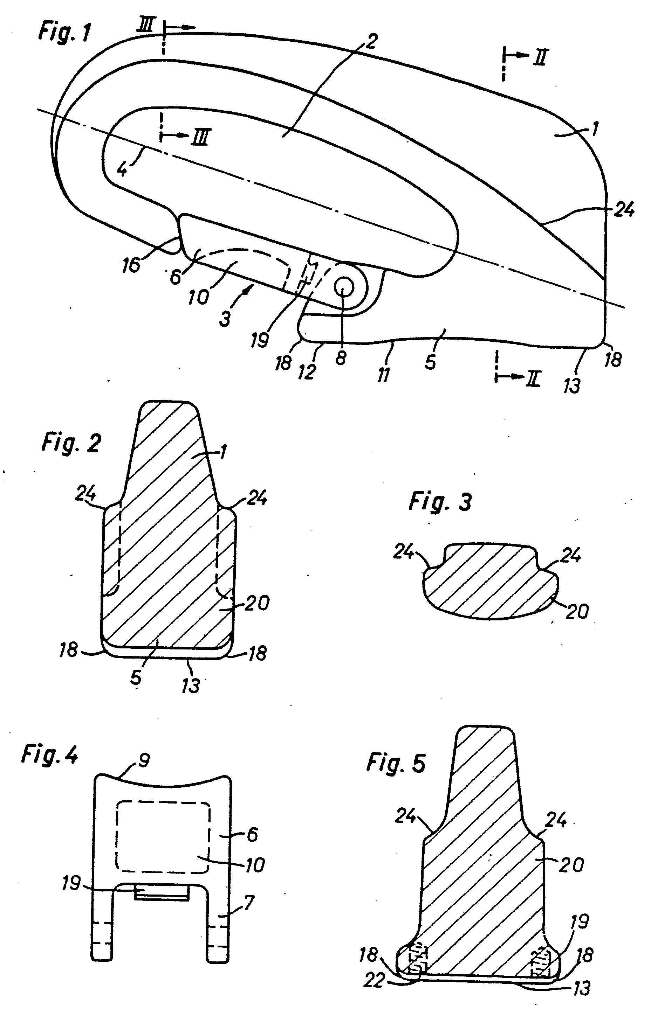

Der in Fig. 1 dargestellte Lasthaken weist einen geringförmigen Hakenkörper 1 von ovaler Form auf, der einen länglichen, ovalen Hakenraum 2 umgibt. Der Hakenkörper 1 bildet auf der einen Seite einen Fussteil 5, welcher an seinem freien Ende eine schwenkbare Sicherungsklinke 6 trägt. Die Sicherungsklinke 6 sperrt ein vom Hakenkörper 1 gebildetes Hakenmaul 3, durch welches ein Kettenglied oder ein Selflansch zum Heben von Lasten eingeführt werden kann. Wie aus Fig. 4 ersichtlich ist, weist die Sicherungsklinke 6 zwei Arme 7 auf, mittels welchen sie mittels eines Bolzens 8 am Fussteil 5 des Hakenkörpers 1 schwenkbar befestigt ist. Wie aus Fig. 1 ersichtlich ist, weist die Sicherungsklinke 6 eine Ausnehmung 10 zwecks Materialersparnis auf, deren rechteckige Form aus Fig. 4 ersichtlich ist. Die Sicherungsklinke 6 weist einen gewölbten und schrägen Rand 9 auf, welcher sich gegen eine Schrägfläche 16 des Hakenkörpers 1 abstützt. Zweckmässig wird die Sicherungsklinke 6 durch eine nicht dargestellte Feder auf die Schrägfläche 16 gedrückt. Hierzu kann eine am Bolzen gelagerte Feder mit einem Bügel verwendet werden, der sich an einem zwischen den Armen 7 angeordneten Stützrand abstützt, während die Enden der Feder sich am Fussteil 5 abstützen.

Wesentlich ist, dass der Hakenraum 2 eine Längsachse 4 aufweist, die von der Auflagefläche des Fussteils 5 weggeneigt ist.

Die Auflagefläche 11 ist, wie aus Fig. 1 ersichtlich ist, leicht gewölbt und bildet an den Schmalseiten Auflagestellen 12, 13. Wie aus Fig. 2 und 5 ersichtlich ist, ist die Auflagestelle 13 und in gleicher Weise die Auflagestelle 12 angenähert eine Ebene von begrenzter Ausdehnung. Damit ist es möglich, den Lasthaken derart auf die Befestigungsfläche aufzusetzen, dass er an mindestens zwei Stellen sich abstützt, selbst wenn die Oberfläche der Befestigungsfläche uneben ist. Damit der Lasthaken ohne Vorarbeit zuverlässig auf der Befestigungsfläche angeschweisst werden kann, sind die Ränder des Fussteils mit Abrundungen 18 versehen.

Obwohl die Schweissung am Fussteil 5 genügend gross und wegen der Abrundungen 18 zuverlässig ausgeführt werden kann, sehen gewisse nationale Sicherheitsvorschriften vor, dass eine Schweissung nicht nur innerhalb des Hakenkörpers, sondern auch an der Befestigungsstelle untersagt ist. In diesem Fall werden am Hakenprofil 20 an den Längsrändern des Fussteils 5 Schultern 19 vorgesehen, in deren Bereich Gewindelöcher 22 vorgesehen werden. Wird beispielsweise der Lasthaken an der Schaufel oder an dem Löffel eines Baggers bzw. eines Trax befestigt, so werden den Gewindelöchern 22 entsprechende Bohrungen in der Schaufel oder in Löffel vorgesehen und der Lasthaken durch von der Innenseite her eingeführte Schrauben festgehalten.

Wie aus Fig. 2, 3 und 5 ersichtlich ist, weist das Hakenprofil 20 eine beidseits angeordnete weitere Schulter 24 auf, die sich, siehe Fig. 1, über den grösseren Teil des Hakenkörpers 1 erstreckt. Wie aus Fig. 3 ersichtlich ist, ist die Innenbegrenzung des Hakenraums 2 stark abgerundet, damit am eingeführten Kettengelenk oder Seilflansch keine zusätzlichen Beanspruchungen auftreten können.

Wesentlich ist, dass die Achse 4 des Hakenraums 2 von der Auflagefläche 11 des Fussteils 5 weggeneigt ist. Dadurch erhält der Hakenkörper eine geeignete Form, welche einerseits das Einführen eines Kettengliedes oder eines Seilflansches erleichtert und, da die Achse 4 auch gleichzeitig die ungefähre Richtung der angreifenden Lastkräfte ist, das Auftreten zusätzlicher Biegebeanspruchungen verhindert. Wesentlich ist, dass dadurch der Fussteil 5 praktisch als Teil des Hakenkörpers 1 ausgebildet werden kann und eine grosse Materialanhäufung am Fussteil 5 vermieden wird. Da dadurch der Abstand von der Auflagefläche 11 zur Kraftangriffsstelle klein gehalten werden kann, kann der Lasthaken auch wesentlich grössere Seitenkräfte aufnehmen, d.h. die Seitenstabilität ist vergrössert. Da das Hakenprofil 20 praktisch dieselbe Breite wie der Fussteil 5 aufweist, siehe Fig. 2 und 3, kann der beschriebene Lasthaken für grössere Lasten verwendet werden. Als Beispiel sei genannt, dass ein gleichgrosser Lasthaken nach dem Stand der Technik und nach der Erfindung verglichen wurden. Der erste ist für 8 t bei 3,6-facher Sicherheit ausgelegt, während der letztere für 10 t bei 4,5-facher Sicherheit ausgelegt ist, was bei gleicher Sicherheit einer Last von 12,5 t entspricht. Diese bedeutende Steigerung der zulässigen Last wird jedoch nicht durch eine Vergrösserung, sondern durch eine Verminderung des Materialaufwandes erreicht.

Der beschriebene Lasthaken wird zweckmässig als Schmiedestück hergestellt, ebenso die Sicherungsklinke 6. Der gewölbte Rand 9 der Sicherungsklinke 6 dient seiner Zentrierung, da die Arme 7 im Bolzen 8 seitlich nicht geführt sind, sondern zwischen den Armen 7 Platz zur Unterbringung einer Schliessfeder vorgesehen ist.

## Ansprüche

1. Lasthaken für den Lastangriff in zwei annähernd entgegengesetzten Richtungen, der mit einer Sicherungsklinde (6) und mit einem Fussteil (5) zum Befestigen an einer Hebevorrichtung, insbesondere an einer Schaufel oder einem Löffel eines Baggers bzw. eines Trax, versehen ist, wobei die Sicherungsklinke (6) und das von der Sicherungsklinke abgedeckte Hakenmaul (3) zum Einführen eines Kettengliedes oder Seilflansches auf der Seite und in der Nähe des Fussteils (5) angeordnet ist, dadurch gekennzeichnet, dass der Fussteil (5) durch einen Teil des Hakenkörpers (1) gebildet ist, welcher einen freien Hakenraum (2) von länglicher Form umgibt, dessen Längsachse (4) zur Auflagefläche (11) des Fussteiles (5) und von dieser weg geneigt ist.

2. Lasthaken nach Anspruch 1, dadurch gekennzeichnet, dass die Auflagefläche (11) leicht gewölbt ist und zwei Auflagestellen (12, 13) aufweist, die voneinander getrennt sind und an den gegenüberliegenden Schmalseiten des Fussteils (5) liegen.

3. Lasthaken nach einem der Ansprüche 1 oder 2, dadurch gekennzeichnet, dass der Fussteil (5) an seinen Rändern Abrundungen (18) aufweist.

4. Lasthaken nach einem der Ansprüche 1 bis 3, dadurch gekennzeichnet, dass der Fussteil (5) an seinen Längsrändern eine über das Hakenprofil (20) vorstehende Schulter (19) aufweist, in deren Bereich Befestigungsbohrungen, z.B. Gewindelöcher (22), angeordnet sind.

5. Lasthaken nach einem der Ansprüche 1 bis 4, dadurch gekennzeichnet, dass die Sicherungsklinke (6) mittels Armen (7) an einem in dem Fussteil (5) gehalterten Bolzen (8) gelagert ist und einen gewölbten Auflagerand (9) aufweist.

6. Lasthaken nach einem der Ansprüche 1 bis 5, dadurch gekennzeichnet, dass die Sicherungsklinke (6) eine gegen den Fussteil (5) gerichtete Ausnehmung (10) aufweist.

## Claims

1. Load hook for load application in two approximately opposite directions, provided with a safety catch (6) and with a base part (5) for fixing to a lifting apparatus, particularly to a dredging or excavating shovel or bucket, the safety catch (6) and the hook mouth (3) covered by the safety catch for inserting a chain link or cable flange being arranged on the side and in the vicinity of the base part (5), characterised in that the base part (5) is formed by part of the hook body (1) surrounding a free elongated hook space (2), whose longitudinal axis (4) is inclined towards and away from the bearing surface (11) of the base part (5).

2. Load hook according to claim 1, characterized in that the bearing surface (11) is slightly curved and has two bearing points (12, 13) which are separated from one another and are located on the opposite narrow sides of the base part (5).

3. Load hook according to one of the claims 1 or 2, characterized in that the base part (5) has rounded portions (18) on its edges.

4. Load hook according to one of the claims 1 to 3, characterized in that the base part (5) has on its longitudinal edges shoulders (19) which project above the hook profile (20) and in whose vicinity are provided fixing bores, e.g. tapped holes (22).

5. Load hook according to one of the claims 1 to 4, characterized in that the safety catch (6) is mounted by means of arms (7) on a bolt (8) secured in the base part (5) and has a curved bearing edge (9).

6. Load hook according to one of the claims 1 to 5, characterized in that the safety catch (6) has a recess (10) directed towards the base part (5).

**Revendications**

1. Crochet porte-charge ou mousqueton pouvant supporter des forces agissant dans deux sens sensiblement opposés et comportant un loquet de verrouillage (6) et une partie de base (5) pour la fixation sur un dispositif de levage notamment sur une pelle ou un godet d'un excavateur, le loquet de verrouillage (6) et l'ouverture (3) du crochet, fermée par le loquet (6) et destinée à l'introduction d'un maillon de chaîne ou d'un anneau de câble, étant prévus sur l'un des côtés et à proximité de la partie de base (5), caractérisé en ce que la partie de base (5) est formée par une partie du corps du crochet (1) qui délimite un espace libre (2) de forme allongée et dont l'axe longitudinal (4) est incliné pour s'approcher dans un sens de la surface d'appui (11) de la partie de base (5) et pour s'éloigner de cette surface dans l'autre sens.

2. Crochet porte-charge suivant la revendication 1, caractérisé en ce que la surface d'appui (11) est légèrement incurvée et présente deux emplacements d'appui (12, 13) qui sont séparés l'un et l'autre et sont situés sur les côtés étroits opposés de la partie de base (5).

3. Crochet porte-charge suivant l'une des revendications 1 ou 2, caractérisé en ce que la partie de base (5) présente des bords arrondis (18).

4. Crochet porte-charge suivant l'une des revendications 1 à 3, caractérisé en ce que la partie de base (5) présente sur ses bords longitudinaux un épaulement (19) faisant saillir du profil (20) du crochet et au niveau desquels sont prévus des troncs de fixation, par exemple des troncs taraudés (22).

5. Crochet porte-charge suivant l'une des revendications 1 à 4, caractérisé en ce que le loquet de sécurité et de verrouillage (6) est monté par l'intermédiaire de ses bras (7) sur un axe (8) fixé dans la partie de base (5) et en ce que le loquet présente un bord d'appui incurvé (9).

6. Crochet porte-charge suivant l'une des revendications 1 à 5, caractérisé en ce que le loquet de sécurité et de verrouillage (6) présente, en regard de la partie de base (5), un évidement (10).

0 016 027

Fig. 1

Fig. 2

Fig. 3

Fig. 4

Fig. 5